(19) Europäisches Patentamt
European Patent Office
Office européen des brevets

(11) **EP 2 323 373 B1**

(12) **EUROPEAN PATENT SPECIFICATION**

(45) Date of publication and mention
of the grant of the patent:
**05.09.2018 Bulletin 2018/36**

(21) Application number: **09804440.7**

(22) Date of filing: **28.07.2009**

(51) Int Cl.:
*H04N 5/20* $^{(2006.01)}$     *H04N 5/202* $^{(2006.01)}$
*H04N 5/57* $^{(2006.01)}$     *G06T 5/00* $^{(2006.01)}$
*G06T 5/40* $^{(2006.01)}$     *G06T 5/50* $^{(2006.01)}$
*H04N 9/69* $^{(2006.01)}$

(86) International application number:
**PCT/CN2009/000843**

(87) International publication number:
**WO 2010/015140 (11.02.2010 Gazette 2010/06)**

(54) **VIDEO ENHANCING METHOD AND DEVICE THEREOF**

VERFAHREN ZUR VIDEOVERSTÄRKUNG UND VORRICHTUNG DAFÜR

PROCÉDÉ ET DISPOSITIF D AUGMENTATION VIDÉO

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **07.08.2008 CN 200810146055**

(43) Date of publication of application:
**18.05.2011 Bulletin 2011/20**

(73) Proprietor: **ZTE Corporation
Shenzhen, Guangdong 518057 (CN)**

(72) Inventor: **GUO, Xiujiang
Guangdong 518057 (CN)**

(74) Representative: **Pistolesi, Roberto et al
Dragotti & Associati Srl
Via Nino Bixio, 7
20129 Milano (IT)**

(56) References cited:
**CN-A- 1 750 043     CN-A- 1 925 558
CN-A- 101 179 650     CN-A- 101 340 510
JP-A- 8 317 250     JP-A- 2007 013 666
US-A1- 2006 061 842     US-A1- 2006 245 017
US-A1- 2007 092 136     US-A1- 2007 171 183**

EP 2 323 373 B1

**Description**

Technical Field

The present invention relates to a video enhancing technology, and more particularly, to a video enhancing method and device.

Technical Background

Video enhancing is the basic means for video pre- and post-processing. In general, because of the limitation of the cost and energy consumption of a mobile phone, a video which can be played normally through cinema or TV suffers from two drawbacks when played through some portable devices, such as mobile phones:

1) A video in the night or a twilight scene will be darker when displayed in a mobile phone such that pictures can not be seen clearly in normal or over-bright indoor and outdoor environments.
2) Details of a video under normal illumination conditions can be displayed very well through cinema or TV, but when the video is displayed on the mobile phone, because of the limitation of screen resolution and color resolution, the scene will be somewhat blurred and some details will be lost, especially for the compressed and decompressed video, this phenomenon will be more serious.

In the first case, the video is enhanced either by increasing the brightness of a display screen or by an image processing method, the former will quickly increase the energy consumption of the mobile phone such that sometimes a video can not be played completely.

US2007/0092136, published 26 April 2007, discloses an automatic digital image enhancement method using an algorithm combining histogram equalization and gamma correction. Linear mapping between pivot points is involved and look-up tables generated on-the-fly are limiting processing power. Thus, the image processing method is used in the present invention to enable the video in the dark scene to be displayed clearly while avoiding the excessive energy consumption of the mobile phone. In the second case, the present invention uses an improved partial histogram-based method to enhance the details and saturation of the image and process the decompressed data in a buffer area in order to enhance the details of the video image and improve the display effect of the video image on the mobile phone.

Summary of the Invention

A technical problem to be solved by the present invention is to provide a video enhancing method and device so as to improve visual effect of a video image under low and normal illumination conditions.

In order to solve the above technical problem, the present invention provides a video enhancing method comprising:

setting a non-linear tensile curve mapping table;
for each frame of an image to be processed, calculating a histogram equalization mapping table of the frame of the image based on brightness data thereof, then calculating a weighted average of mapping values in the non-linear tensile curve mapping table and the histogram equalization mapping table corresponding to each brightness value in a set of brightness values of pixel points of the frame of the image, and recording a corresponding relation between each brightness value and the weighted average of the mapping values into a brightness mapping table; and then updating the brightness value of the pixel points of the frame of the image to the weighted average of the mapping values according to the brightness mapping table to complete brightness enhancement.

Wherein, the calculating the weighted average of mapping values in the non-linear tensile curve mapping table and the histogram equalization mapping table corresponding to each brightness value in the set of the brightness values of the pixel points of the frame of the image comprises calculating the weighted average of the mapping values using the following equation:

$$MapTablAvg[k] \ = \ (\mathrm{Im}\,gClass \times MapTabEq[k] + (M - \mathrm{Im}\,gClass) \times MapTabGm[k]) / M$$

where k is a brightness value in the set of the brightness values of the pixel points of the frame of the image; M is the number of set brightness classes of the image;

*MapTablAvg[k]* is a mapping value corresponding to the brightness value *k* in the brightness mapping table, and *MapTablAvg[k]* calculated by the above equation constitutes the brightness mapping table;

Im *gClass* is a brightness class of the frame of the image obtained by detecting the brightness of the frame of the image;

*MapTabEq[k]* is a mapping value corresponding to the brightness value *k* in the histogram equalization mapping table; and

*MapTabGm[k]* is a mapping value corresponding to the brightness value *k* in the non-linear tensile curve mapping table.

Further, the calculating the histogram equalization mapping table of the frame of the image based on brightness data thereof comprises:

step 1, for a frame of the image to be processed, firstly calculating a brightness histogram of the frame of the image to obtain a histogram value of each brightness value k, i.e., the number of pixel points having the brightness value, $k=0,1,2,...L-1$, where L is the number of the divided intervals of the whole histogram;

step 2, calculating an intermediate point $\beta_n$ in each divided interval of the histogram, and then calculating a dynamic breakpoint $c_n$ between the intervals of the histogram according to the following equation:

$$c_n = \left\lfloor \frac{a_n + b_n}{2} + \alpha \times \left( \beta_n - \frac{a_n + b_n}{2} \right) \right\rfloor \; ; \text{or} \quad c_n = \left\lceil \frac{a_n + b_n}{2} + \alpha \times \left( \beta_n - \frac{a_n + b_n}{2} \right) \right\rceil$$

where $a_n$, $b_n$ are a head point and end point of an interval of the histogram, respectively; $\alpha$ is a preset control parameter of histogram equalization degree, $0 \le \alpha \le 1$; and $\lfloor * \rfloor$ represents rounding down to the nearest integer and $\lceil * \rceil$ represents rounding up to the nearest integer, $0 < C_n < (L-1)$;

step 3, repeating step 2, dividing the whole histogram into L intervals through n-times iteratively calling, and numbering all intervals from 0 to L-1 in turn in an order, from big to small, of the first brightness value contained in each interval, then correlating each brightness value contained in each interval with a mapping value which equals to the interval number, and replacing each brightness value in the interval [0,L-1] with the corresponding mapping value to obtain the histogram equalization mapping table, where $2^n = L$.

Preferably, the number L of the divided intervals of the histogram is 256, and the number of the iterations is 8.

Preferably, the value range of the control parameter $\alpha$ of the histogram equalization degree is 0.4-0.6.

Further, when there are the same intervals among the divided intervals, each interval among the same intervals is numbered separately and successively; a brightness value in the same intervals corresponds to multiple numbers, and the brightness value is mapped to one of the numbers by convention.

Further, after the brightness enhancement is completed, the method also comprises enhancing saturation of the frame of the image by: setting brightness classes of the image and setting a saturation coefficient corresponding to each brightness class; firstly detecting the brightness class of the frame of the image and then adjusting chromaticity values of the pixel points of the frame of the image using a corresponding saturation coefficient when the saturation of the frame of the image is enhanced.

Preferably, the brightness class of the frame of the image is determined by: storing configuration information of the brightness classes of the frame of the image, including the brightness classes and a brightness value interval corresponding to each class; and detecting the frame of the image to obtain a brightness value of the frame of the image, the brightness class corresponding to the interval to which the brightness value belongs being the brightness class of the frame of the image Img*Class.*

Further, the configuration information of the brightness classes of the frame of the image is determined by: dividing the brightness of the frame of the image into *M* classes, dividing the entire range of brightness values into *M* intervals corresponding one by one to the *M* classes, a brightness class corresponding to an interval with the lowest brightness value being 0, a brightness class corresponding to an interval with the second lowest brightness value being 1, and an interval with an higher brightness value corresponding to an higher brightness class, and putting all brightness values which are equal to or greater than a set normal brightness threshold into one interval, which corresponds to a brightness class of *M*-1.

Further, when the frame of the image is in a YUV format, the enhancing the saturation of the frame of the image is performed according to the following equations:

$$Uout(x, y) = Su[m] \times (Uin(x, y) - \frac{L}{2}) + \frac{L}{2}$$

$$Vout(x, y) = Su[m] \times (Vin(x, y) - \frac{L}{2}) + \frac{L}{2}$$

where *Uin(x,y)* and *Vin(x,y)* are values of U components and V components of the pixel points before the saturation enhancement, *Uout(x,y)* and *Vout(x,y)* are values of the U components and V components of the pixel points after the saturation enhancement, *Su[m]* is a saturation coefficient in an array Su corresponding to each brightness class, which is recorded in the array Su, *m*=0,1,...M-1, and 0,1,...M-1 are the set brightness classes of the image, the saturation coefficient is 1 when the brightness class is M-1, where L is the number of the divided intervals of the whole histogram.

Preferably, the number L of the divided intervals of the whole histogram is 256.

The present invention provides a brightness enhancing module comprising a non-linear tensile curve table storing unit, a histogram equalization mapping table calculating unit, a brightness mapping table calculating unit and an image brightness enhancement mapping unit.

The non-linear tensile curve table storing unit is configured to store a non-linear tensile curve mapping table to be used.

The histogram equalization mapping table calculating unit is configured to, for each frame of an image to be processed, calculate a corresponding histogram equalization mapping table based on brightness data thereof.

The brightness mapping table calculating unit is configured to calculate a weighted average of mapping values in the non-linear tensile curve mapping table and the histogram equalization mapping table corresponding to each brightness value in a set of brightness values of pixel points of the frame of the image, and record a corresponding relation between each brightness value and the weighted average of the mapping values into a brightness mapping table.

The image brightness enhancement mapping unit is configured to update the brightness value of the pixel points of the frame of the image to the weighted average of the mapping values according to the brightness mapping table to complete brightness enhancement. Wherein, the brightness mapping table calculating unit is configured to calculate the weighted average of the mapping values in the non-linear tensile curve mapping table and the histogram equalization mapping table corresponding to each brightness value in the set of brightness values of the pixel points of the frame of the image according to the following equation:

$$MapTablAvg[k] = (\text{Im} \, gClass \times MapTabEq[k] + (M - \text{Im} \, gClass) \times MapTabGm[k]) / M$$

where k is a brightness value in the set of brightness values of the pixel points of the frame of the image;
M is the number of set brightness classes of the image;
*MapTablAvg[k]* is a mapping value corresponding to the brightness value k in the brightness mapping table, and *MapTablAvg[k]* calculated by the above equation constitutes the brightness mapping table;
Im *gClass* is a brightness class of the frame of the image obtained by detecting the brightness of the frame of the image;
*MapTabEq[k]* is a mapping value corresponding to the brightness value *k* in the histogram equalization mapping table; and
*MapTabGm[k]* is a mapping value corresponding to the brightness value *k* in the non-linear tensile curve mapping table.

Further, the histogram equalization mapping table calculating unit comprises a brightness histogram calculating unit, an intermediate point calculating unit, a dynamic breakpoint calculating unit, a control unit and a mapping table generating unit.

The brightness histogram calculating unit is configured to calculate a brightness histogram of a frame of the image to be processed to obtain a histogram value of each brightness value *k*, i.e., the number of pixel points having the brightness value, and to output to the intermediate point calculating unit, *k*=0,1,2,...L-1, where L is the number of the divided intervals of the whole histogram.

The intermediate point calculating unit is configured to calculate an intermediate point $\beta_n$ in each divided interval of the histogram based on the histogram value of each brightness value *k*, to output to the dynamic breakpoint calculating unit.

The dynamic breakpoint calculating unit is configured to calculate a dynamic breakpoint $c_n$ between the intervals of the histogram according to the following equation:

$$c_n = \left\lfloor \frac{a_n + b_n}{2} + \alpha \times \left( \beta_n - \frac{a_n + b_n}{2} \right) \right\rfloor \; ; \text{ or } \; c_n = \left\lceil \frac{a_n + b_n}{2} + \alpha \times \left( \beta_n - \frac{a_n + b_n}{2} \right) \right\rceil$$

where $a_n$, $b_n$ are a head point and end point of an interval of the histogram, respectively; $\alpha$ is a preset control parameter of histogram equalization degree, $0 \leq \alpha \leq 1$; and $\lfloor * \rfloor$ represents rounding down to the nearest integer and $\lceil * \rceil$ represents rounding up to the nearest integer, $0 < C_n < (L-1)$.

The control unit is configured to control the intermediate point unit and dynamic breakpoint calculating unit to perform operations, divide the whole histogram into L intervals through n-times iteratively calling, and output the L divided intervals and brightness values contained therein to the mapping table generating unit.

The mapping table generating unit is configured to number all intervals from 0 to L-1 in turn in an order, from big to small, of the first brightness value contained in each interval, then correlate each brightness value contained in each interval with a mapping value which equals to the interval number, and replace each brightness value in the interval [0,L-1] with the corresponding mapping value to obtain the histogram equalization mapping table, where $2^n = L$.

Preferably, the control unit is configured to divide the histogram into 256 intervals, the number of the iterations being 8.

The present invention further provides a video enhancing device comprising the brightness enhancing module.

Further, the video enhancing device also comprises an image brightness detecting module.

The image brightness detecting module comprises a configuration information storing unit and a brightness class calculating unit.

The configuration information storing unit is configured to store configuration information of the brightness classes of the frame of the image, including the brightness classes and a brightness value interval corresponding to each class.

The brightness class calculating unit is configured to calculate, based on brightness data of a frame of the received image to be processed, a brightness value of the frame of the image, determine the brightness class corresponding to the interval to which the brightness value belongs according to the configuration information, output the brightness class as the brightness class of the frame of the image to the brightness mapping table calculating unit in the brightness enhancing module.

Preferably, there are M brightness classes, the entire range of brightness values is divided into M intervals corresponding one by one to the M classes, a brightness class corresponding to an interval with the lowest brightness value is 0, a brightness class corresponding to an interval with the second lowest brightness value is 1, an interval with an higher brightness value corresponds to an higher brightness class, and all brightness values which are equal to or greater than a set normal brightness threshold are put into one interval, which corresponds to a brightness class of M-1.

Preferably, the video enhancing device further comprises a saturation enhancing module comprising a configuration information storing unit and a saturation enhancement calculating unit.

The brightness class calculating unit in the image brightness detecting module is further configured to output the brightness class of the frame of the image to be processed to the saturation enhancement calculating unit in the saturation enhancing module.

The configuration information storing unit is configured to store the set brightness classes of the image and a set saturation coefficient corresponding to each brightness class.

The saturation enhancement calculating unit is configured to adjust chromaticity values of the pixel points of the frame of the image using the corresponding saturation coefficient according to brightness class of the frame of the received image when the saturation of the frame of the image to be processed is enhanced.

Using the method of the present invention, low illumination images and videos or images in normal illumination are enhanced by detecting the images in different illumination conditions and according to detection results, the dynamic range of the pixel values is expanded appropriately while excessive combination of gray levels is avoided as much as possible, thereby solving the image distortion problem brought by the conventional histogram equalization method, improving the visual effect of the image significantly, and obtaining the output image with higher quality. Thus, the processed video image is clearer than the source image in low illumination, its details are more outstanding than those of the source image in normal illumination, and the effect is better and accords with human eyes' vision.

The method has less amount of calculation such that real-time requirement can be satisfied and stronger practical value can be achieved. The method in accordance with the present invention not only can be configured as ATM, wireless environment, but also can be configured as the processing of video decoded image in the Internet video communication, especially configured as video enhancement of mobile phone TV.

Brief Description of Drawings

FIG. 1 is a schematic diagram of a position of a video enhancing device in a system according to an embodiment of the present invention;

FIG. 2 is a block diagram of a video enhancing device in Fig. 1;

FIG. 3 is a structural diagram of units of a brightness enhancing module in Fig. 2;

FIG. 4 is a structural diagram of units of a saturation enhancing module in Fig.2;

FIG. 5 is a flow chat of an algorithm of a histogram equalization mapping table calculating unit in Fig. 3.

FIG. 6 is a schematic diagram of a tensile curve used in an embodiment of the present invention.

Preferred Embodiments of the Present Invention

Take video enhancement of mobile phone TV as an example, specific embodiments of the present invention will be described below in conjunction with the accompanying drawings. However, the video enhancement method in accordance with the present invention is not limited to the video enhancement of mobile TV, it can also be configured to be used for other situations where video enhancement is required.

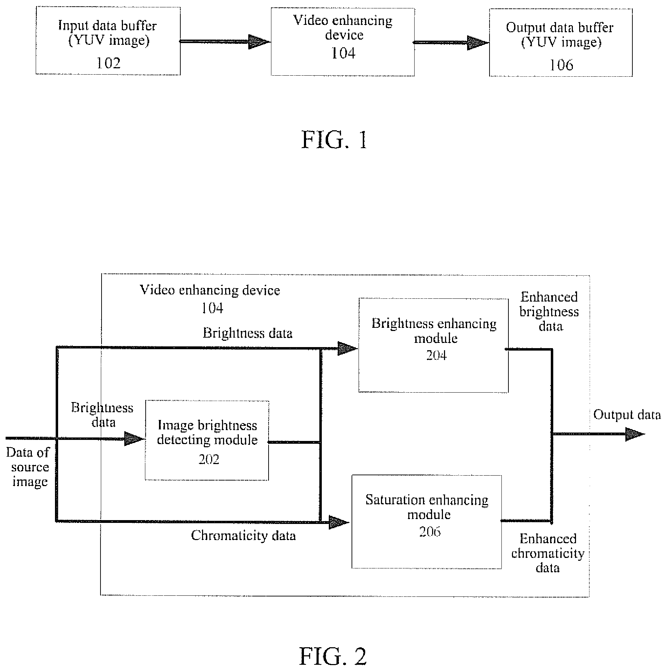

FIG. 1 shows a position of the whole video enhancing device in a system. The video enhancing device 104 performs video enhancement processing on source image data output from an input data buffer 102, and then outputs the processed target image data to an output data buffer 106. The source image processed in this embodiment is an image in a YUV format, however, the present invention may also process an image in a RGB format.

Fig. 2 shows a block diagram of the video enhancing device 104 in the Fig. 1. The video enhancing device 104 comprises an image brightness detecting module 202, a brightness enhancing module 204 and a saturation enhancing module 206. Brightness data (such as a value of a component Y) of the source image data is input to the image brightness detecting module 202 and the brightness enhancing module 204, and chromaticity data (such as values of components U, V) of the source image is input to the saturation enhancing module 206. The image brightness detecting module 202 outputs the detected brightness class of the image to the brightness enhancing module 204 and the saturation enhancing module 206. The brightness enhancing module 204 enhances brightness values of pixel points of the image according to the brightness class and outputs the enhanced brightness values. The saturation enhancing module 206 enhances chromaticity values of the pixel points of the image according to the brightness class and outputs the enhanced chromaticity values.

The image brightness detecting module 202 further comprises a configuration information storing unit and a brightness class calculating unit.

The configuration information storing unit is configured to store configuration information of the brightness classes of the frame of the image, including the brightness classes and a brightness value interval corresponding to each class.

In this embodiment, the brightness classes of the image is divided into $M$ classes, the entire range of brightness values is divided into $M$ intervals corresponding one by one to the $M$ classes. A brightness class corresponding to an interval with the lowest brightness value is 0, a brightness class corresponding to an interval with the second lowest brightness value is 1, and so forth. Moreover, all brightness values which are equal to or greater than a set normal brightness threshold are put into one interval, which corresponds to a brightness class of $M$-1.

The brightness class calculating unit is configured to calculate the brightness value of the source image according to the brightness data of the received source image, determine the brightness class corresponding to the interval to which the brightness value belongs according to the configuration information, and output the brightness class as the brightness class of the source image to the brightness mapping table calculating unit 306 in the brightness enhancing module 204 and the saturation enhancement calculating unit 404 in the saturation enhancing module 206.

The brightness mapping table calculating unit 306 and the saturation enhancement calculating unit 404 will be described below.

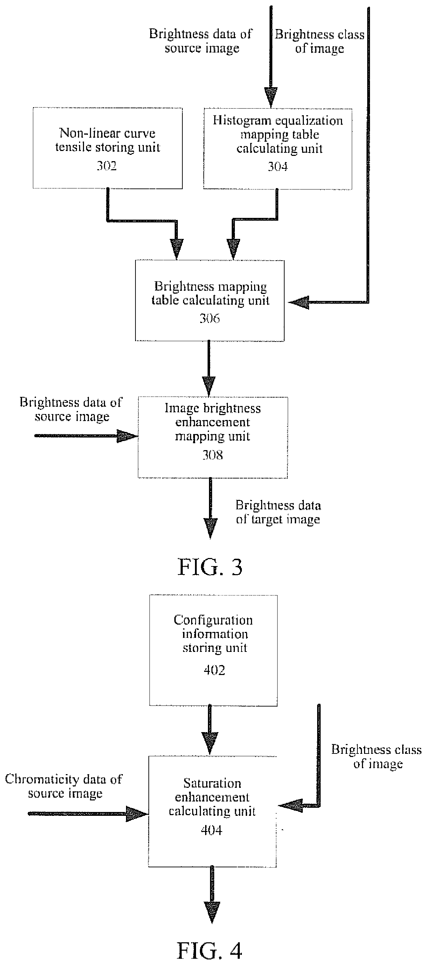

Fig. 3 is a structural diagram of units of the brightness enhancing module 204 in Fig. 2. The brightness enhancing module 204 comprises a non-linear curve tensile table storing unit 302, a histogram equalization mapping table calculating unit 304, a brightness mapping table calculating unit 306 and an image brightness enhancement mapping unit 308.

The non-linear curve tensile table storing unit 302 is configured to store a non-linear tensile curve table to be used.

The histogram equalization mapping table calculating unit 304 is configured to calculate a corresponding histogram equalization mapping table based on the input brightness data of the source image. The specific method will be described hereinafter.

The brightness mapping table calculating unit 306 is configured to calculate a weighted average of mapping values in the non-linear tensile curve mapping table and the histogram equalization mapping table corresponding to each brightness value in a set of brightness values of pixel points of the frame of the image, and record a corresponding relation between each brightness value and the weighted average of the mapping values into a brightness mapping table. The specific computing equation will be described below.

The image brightness enhancement mapping unit 308 is configured to update the brightness value of the pixel points of the input source image to the weighted average of the mapping values according to the brightness mapping table to complete brightness enhancement.

Fig. 4 is a structural diagram of units of the saturation enhancing module 206 in Fig.2. The saturation enhancing module 206 comprises a configuration information storing unit 402 and a saturation enhancement calculating unit 404.

The configuration information storing unit 402 is configured to store the set brightness class of the image and a set saturation coefficient corresponding to each brightness class, or a corresponding relation between chromaticity values of the pixel points of the source image and chromaticity values of the pixel points of the saturation-enhanced target image.

The saturation enhancement calculating unit 404 is configured to adjust the chromaticity values of the pixel points of the source image using the corresponding saturation coefficient according to the brightness class of the received source image when the saturation of the source image is enhanced, or search a chromaticity mapping table based on the input chromaticity data, i.e., the chromaticity values of the pixel points, of the source image and the detected brightness class of the image, to obtain the chromaticity values of the pixel points of the saturation-enhanced target image.

The histogram equalization mapping table calculating unit 304 further comprises a brightness histogram calculating unit, an intermediate point calculating unit, a dynamic breakpoint calculating unit, a control unit and a mapping table generating unit (not shown).

The brightness histogram calculating unit is configured to calculate a brightness histogram of the source image to obtain a histogram value of each brightness value k, i.e., the number of pixel points having the brightness value, and to output to the intermediate point calculating unit, k=0,1,2,...255.

The intermediate point calculating unit is configured to calculate an intermediate point $\beta_n$ of each divided interval of the histogram based on the histogram value of each brightness value $k$, to output to the dynamic breakpoint calculating unit.

The dynamic breakpoint calculating unit is configured to calculate a dynamic breakpoint $c_n$ of the interval of the histogram according to the following equation:

$$c_n = \left\lfloor \frac{a_n + b_n}{2} + \alpha \times (\beta_n - \frac{a_n + b_n}{2}) \right\rfloor \quad ; \text{or} \quad c_n = \left\lceil \frac{a_n + b_n}{2} + \alpha \times (\beta_n - \frac{a_n + b_n}{2}) \right\rceil$$

where $a_n, b_n$ are a head point and end point of an interval of the histogram, respectively; $\alpha$ is a preset control parameter of histogram equalization degree, $0 \leq \alpha \leq 1$; and $\lfloor * \rfloor$ represents rounding down to the nearest integer and $\lceil * \rceil$ represents rounding up to the nearest integer, $0 < C_n < (L-1)$.

The control unit is configured to control the intermediate point unit and dynamic breakpoint calculating unit to perform operations, divide the whole histogram into 256 intervals through n-times iteratively calling, and output the 256 divided intervals and brightness values contained therein to the mapping table generating unit.

The mapping table generating unit is configured to number all intervals from 0 to 255 in turn in an order, from big to small, of the first brightness value contained in each interval, correlate each brightness value contained in each interval with a mapping value which equals to the interval number, and replace each brightness value in the interval [0,255] with the corresponding mapping value to obtain the histogram equalization mapping table.

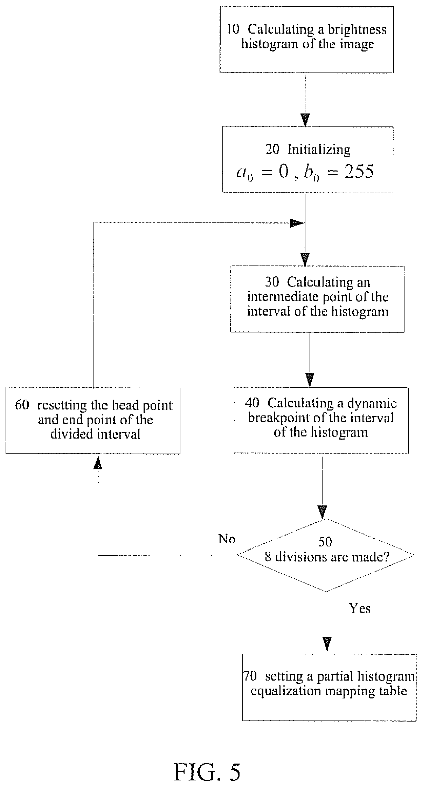

A processing procedure of the histogram equalization mapping table calculating unit 304 illustrated in FIG. 5 comprises the following steps:

Step 10, an image brightness histogram is calculated;

Step 20, head and end points $a_0 = 0$, $b_0$, = 255 of the intervals of the histogram are initialized;

Step 30, an intermediate point of each divided interval of the histogram is calculated;

Step 40, a dynamic breakpoint of each interval of the histogram is calculated;

Step 50, it is determined whether 8 divisions are made, if yes, step 70 is performed, otherwise step 60 is performed;

Step 60, the head point and end point of the divided interval are reset; and

Step 70, a histogram equalization mapping table is set according to the 256 divided intervals of the histogram.

The calculation of the intermediate point and dynamic breakpoint and the specific method of setting the histogram equalization mapping table according to the intervals of the histogram will be described in detail below and will not repeated herein any longer.

Based on the above device, the method in accordance with this embodiment comprises the following steps: Step 1, a non-linear tensile curve mapping table *MapTabGm* to be used is determined firstly.

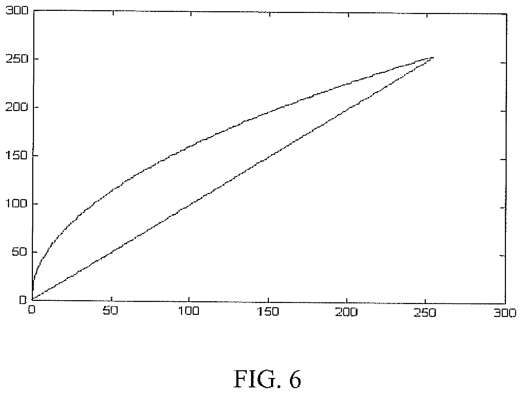

The property of the non-linear tensile curve (or piecewise linear) is that a slope of each point in low illumination should be greater than 1. The curve in FIG. 6 is an example of this type of curve. A gamma curve with a gamma coefficient being less than 1 is a similar curve as well. The brightness of a low illumination image may be improved by using the non-linear tensile curve mapping table *MapTabGm.* Each discrete brightness value in an interval [0,255] can be mapped to a brightness value in another interval [0,255] according to the mapping table to generate a one-dimension mapping table with 256 points finally. The non-linear tensile curve mapping table may use an existing mapping table, or may be chosen according to practical effect after the processing of a sufficient number of images.

Step 2, for a frame of the image to be processed, a brightness histogram of the frame of the image is calculated firstly to obtain a histogram value of each brightness value $k$, i.e., the number of pixel points having the brightness value, $k=0,1,2,...255$.

Step 3, an intermediate point of each divided interval of the histogram is calculated.

The intermediate point of the interval of the histogram is $\beta_n$, which enable the following equation to be tenable, $0 < \beta_n < 255$:

$$\sum_{k=a_n}^{k=\beta_n} h[k] = \sum_{k=\beta_n}^{k=b_n} h[k]$$

where $h[k]$ is the histogram value of the brightness $k$, i.e., the number of the pixel points having the brightness value; $a_n$, $b_n$ are a head point and end point of an interval of the histogram, respectively, and $n$ represents $n^{th}$ iterative calculation. The head point and end point of the interval of the histogram are 0 and 255, respectively, in the first iteration calculation.

Since the number of the pixel points in the interval of the histogram is discrete, when functions are written, the total number of the pixel points in the interval is calculate firstly, and then the number of the pixel points is accumulated from the head point. If the accumulated number of the pixel points is greater than or equal to the half of the total number of the pixel points, then the intermediate point $\beta_n$ in the histogram is found.

Step 4, a dynamic breakpoint $c_n$ of the interval of the histogram is calculated according to the following equation:

$$c_n = \left\lfloor \frac{a_n + b_n}{2} + \alpha \times (\beta_n - \frac{a_n + b_n}{2}) \right\rfloor$$

where $a_n, b_n$ are a head point and end point of an interval of the histogram, respectively; $\beta_n$ is an intermediate point of an interval of the calculated histogram; $\alpha$ is a preset control parameter of histogram equalization degree, the range of $\alpha$ is 0~1, preferably 0.40~0.6, $\alpha$ may be chosen according to an empirical value, and different values of $\alpha$ may be set according to different brightness values of the frame of the image; $\lfloor * \rfloor$ represents rounding down to the nearest integer ( ), and $0<C_n<255$. The rounding down to the nearest integer in the equation may also be modified to rounding up to the nearest integer.

The dynamic breakpoint $c_n$ divides the interval of the histogram with the head point and end point being $a_n$, $b_n$ into 2 intervals, one of which $c_n$ may belong to upon the division. Since discrete brightness values are contained in the interval herein, the head point and end point of the divided interval may be the same, i.e., only one brightness value is contained. If the interval is subdivided, two same intervals containing the brightness value will be obtained.

Step 5, step 3 and step 4 are repeated, and the entire histogram may be divided into 256 intervals through 8-times iteratively calling.

Some of the 256 divided intervals may comprise multiple brightness values, or there may be intervals with the head and end points being same.

Step 6, the 256 divided intervals are numbered from 0 to 255 in turn in an order, from big to small, of the first brightness value contained therein, then each brightness value contained in each interval is correlated with a mapping value which equals to the interval number, and each brightness value in the interval [0,255] is replace with the corresponding mapping value to obtain the histogram equalization mapping table *MapTabEq.*

Because there are 256 numbers, each interval among the same intervals should be numbered separately and successively. When mapped, a brightness value in the same intervals may correspond to multiple numbers and may be mapped to one of the numbers by convention, which number is not limited specifically. For example, the number may be a number of the first or last interval among the same intervals, or a rounded number obtained by averaging the numbers of the first and last intervals, etc. The histogram equalization mapping table *MapTabEq* is also a one-dimension mapping table with the interval [0,255].

It can be seen that when the value of $\alpha$ is 1, the equation in step 4 is the general method of obtaining the dynamic breakpoint in equalizing the histogram. The accordingly obtained histogram equalization mapping table is also the same as that obtained by the known method. However, in this embodiment, the control parameter $\alpha$ is added such that the obtained histogram equalization mapping table can expand the dynamic range of the pixel values appropriately while avoiding excessive combination of gray levels as much as possible.

Step 7, the brightness class of the frame of the image is detected and the brightness class to which the detected brightness value belongs is determined.

The brightness of the image may be divided into *M* classes, the entire range of brightness values is divided into *M* intervals corresponding one by one to the *M* classes. A brightness class corresponding to an interval with the lowest brightness value is 0, i.e., the image is darkest, a brightness class corresponding to an interval with the second lowest brightness value is 1, ......, likewise, a brightness class corresponding to an interval with normal or higher brightness value is *M*-1. A normal brightness threshold (which may be a value between 110 and 135) may be set, and any brightness value which is greater than or equal to the normal brightness threshold is put in an interval corresponding to a brightness class of *M*-1.

The frame of the image is detected to obtain the brightness value of the frame of the image, and the brightness class corresponding to the interval to which brightness value belongs is the brightness class of the frame of the image.

Step 8, an integrative brightness mapping table *MapTablAvg,* which is one dimensional and having an interval [0,255], is generated based on the determined brightness class and the generated non-linear tensile curve mapping table *MapTabGm* and histogram equalization mapping table *MapTabEq* according to the following equation:

$$MapTablAvg[k] = (\operatorname{Im}gClass \times MapTabEq[k] + (M - \operatorname{Im}gClass) \times MapTabGm[k])/M$$

where *MapTablAvg*[*k*] is a mapping value corresponding to the brightness value *k* in the brightness mapping table *MapTablAvg,* and *MapTablAvg*[*k*] calculated by the above equation constitutes *MapTablAvg*;

Im *gClass* is a brightness class of the frame of the detected image;

*MapTabEq*[*k*] is a mapping value corresponding to the brightness value *k* in the histogram equalization mapping table *MapTabEq*; and

*MapTabGm*[*k*] is a mapping value corresponding to the brightness value *k* in the non-linear tensile curve mapping table *MapTabGm.*

The above brightness value *k* may be any brightness value in [0,255], or a set of brightness values of the pixel points of the image may be detected firstly such that only a brightness value in the set of brightness values is calculated as above. Thus, the amount of calculation is reduced.

In fact, a weighted average is calculate herein in two manners, the histogram equalization mapping and non-linear tensile curve mapping, and a weight thereof is adjusted adaptively according to the brightness of the image. Of course, the used weight is not limit to the above algorithm, a set of weights corresponding to the brightness class may be defined directly for calculation. Because the non-linear tensile curve mapping may improve the brightness of the low illumination image, but not enhance details of the image, in this embodiment, different weights are used by employing the two manners and according to the brightness of the detected image to achieve the optimized effect of brightness enhancement. Even though the histogram equalization mapping table obtained by the known method is used, its effect is better than the effect of the existing image enhancement processing.

Step 9, the brightness value of the pixel points of the frame of the image is mapped according to the generated brightness mapping table to achieve the effect of brightness enhancement.

Step 10, the saturation of the frame of the image is enhanced according to a saturation coefficient.

After the adjustment of the brightness, especially in low illumination, after the brightness enhancement, the entire image will whiten and the saturation of the image decreases, so it is necessary to enhance the saturation. In the YUV color space, Y represents a brightness component, which is enhanced using the above step 1 to step 9, (U-128)/(V-128) represents hue, and $\sqrt{(U-128)^2 + (V-128)^2}$ represents saturation. The principle of adjusting the saturation is to keep (U-128)/(V-128) unchanged and increase the saturation of the image.

It should be note that the brightness enhancement and saturation enhancement may be performed simultaneously.

When the saturation is enhanced, an array Su of saturation coefficients may be defined first, and Su[*m*] is a element of the array, i.e., a saturation coefficient corresponding to each brightness class, e.g, Su={1.5, 1.48, 1.46, 1.44, 1.42, 1.40, 1.38, 1.36, 1.34, 1.32, 1.30, 1}; where *m* is the set brightness class of the image, *m*=0,1,...M-1, and M is the number of the set brightness classes of the image. The coefficients in the array are the saturation coefficients under different brightness classes and may be chosen and adjusted according to tests, the set of the above given coefficients is only an example. When the brightness class is M-1, that is, in the case of normal or higher illumination, the saturation is not enhanced, so its coefficient is 1.

The saturation enhancement may be solved by searching a table calculated in advance to accelerate the calculation speed; or it may be calculated during the enhancement, and the calculation equation is as follows:

$$Uout(x, y) = Su[m] \times (Uin(x, y) - 128) + 128$$

$$Vout(x, y) = Su[m] \times (Vin(x, y) - 128) + 128$$

where *Uin(x,y)* and *Vin(x,y)* are values of U and V components of the pixel points before the saturation enhancement, respectively, while *Uout(x,y)* and *Vout(x,y)* are values of U and V components of the pixel points after the saturation enhancement, respectively.

It should be noted that the above brightness and chromaticity values of the image in the present invention may also use the brightness and chromaticity values in the RGB space. How to determine the brightness values and chromaticity values of the pixel points of the image in the RGB space is discussed much in the prior art and will not repeated herein any longer.

Industrial Applicability

According to the present invention, low illumination images and videos or images in normal illumination are enhanced by detecting the images in different illumination conditions and according to detection results, the dynamic range of the pixel values is expanded appropriately while excessive combination of gray levels is avoided as much as possible, thereby solving the image distortion problem brought by the conventional histogram equalization method, improving the visual effect of the image significantly, and obtaining the output image with higher quality. Thus, the processed video image is clearer than the source image in low illumination, its details are more outstanding than those of the source image in normal illumination, and the effect is better and accords with human eyes' vision. The method in accordance with the present invention has less amount of calculation such that real-time requirement can be satisfied and stronger practical value can be achieved. The method not only can be configured as ATM, wireless environment, but also can be configured as the processing of video decoded image in the Internet video communication, especially configured as video enhancement of mobile phone TV, thus, it has strong industrial applicability.

**Claims**

1. A video enhancing method comprising:

setting a non-linear tensile curve mapping table;
for each frame of an image to be processed, calculating a histogram equalization mapping table of the frame of the image based on brightness data thereof, then calculating a weighted average of mapping values in the non-linear tensile curve mapping table and the histogram equalization mapping table corresponding to each brightness value in a set of brightness values of pixel points of the frame of the image, and recording a corresponding relation between each brightness value and the weighted average of the mapping values into a brightness mapping table; and then updating the brightness value of the pixel points of the frame of the image to the weighted average of the mapping values according to the brightness mapping table to complete brightness enhancement; **characterized in that**: the calculating the weighted average of mapping values in the non-linear tensile curve mapping table and the histogram equalization mapping table corresponding to each brightness value in the set of the brightness values of the pixel points of the frame of the image comprises calculating the weighted average of the mapping values using the following equation:

$$MapTablAvg[k] = (\text{Im}\,gClass \times MapTabEq[k] + (M - \text{Im}\,gClass) \times MapTabGm[k])/M$$

where $k$ is a brightness value in the set of the brightness values of the pixel points of the frame of the image;
M is the number of set brightness classes of the image;
*MapTablAvg[k]* is a mapping value corresponding to the brightness value $k$ in the brightness mapping table, and *MapTablAvg[k]* calculated by the above equation constitutes the brightness mapping table;
Im *gClass* is a brightness class of the frame of the image obtained by detecting the brightness of the frame of the image;
*MapTabEq[k]* is a mapping value corresponding to the brightness value $k$ in the histogram equalization mapping table; and
*MapTabGm[k]* is a mapping value corresponding to the brightness value $k$ in the non-linear tensile curve mapping table.

2. The method of claim 1, wherein the calculating the histogram equalization mapping table of the frame of the image based on brightness data thereof comprises:

step 1, for a frame of the image to be processed, firstly calculating a brightness histogram of the frame of the image to obtain a histogram value of each brightness value k, i.e., the number of pixel points having the brightness value, $k=0,1,2,...L-1$, where L is the number of the divided intervals of the whole histogram;
step 2, calculating an intermediate point $\beta_n$ in each divided interval of the histogram, and then calculating a dynamic breakpoint $c_n$ between the intervals of the histogram according to the following equation:

$$c_n = \left\lfloor \frac{a_n + b_n}{2} + \alpha \times \left( \beta_n - \frac{a_n + b_n}{2} \right) \right\rfloor \;; \text{ or } \quad c_n = \left\lceil \frac{a_n + b_n}{2} + \alpha \times \left( \beta_n - \frac{a_n + b_n}{2} \right) \right\rceil$$

where $a_n$, $b_n$ are a head point and end point of an interval of the histogram, respectively; $\alpha$ is a preset control parameter of histogram equalization degree, $0 \leq \alpha \leq 1$; and $\lfloor * \rfloor$ represents rounding down to the nearest integer and $\lceil * \rceil$ represents rounding up to the nearest integer, $0 < C_n < (L-1)$;
step 3, repeating step 2, dividing the whole histogram into L intervals through n-times iteratively calling, and numbering all intervals from 0 to L-1 in turn in an order, from big to small, of the first brightness value contained in each interval, then correlating each brightness value contained in each interval with a mapping value which equals to the interval number, and replacing each brightness value in the interval [0,L-1] with the corresponding mapping value to obtain the histogram equalization mapping table, where $2^n=L$.

3. The method of claim 2, wherein the number L of the divided intervals of the histogram is 256, and the number of the iterations is 8.

4. The method of claim 3, wherein the value range of the control parameter $\alpha$ of the histogram equalization degree is 0.4~0.6.

5. The method of claim 2, wherein when there are the same intervals among the divided intervals, each interval among the same intervals is numbered separately and successively; a brightness value in the same intervals corresponds to multiple numbers, and the brightness value is mapped to one of the numbers by convention.

6. The method of claim 1, wherein after the brightness enhancement is completed, the method further comprises enhancing saturation of the frame of the image by:
setting brightness classes of the image and setting a saturation coefficient corresponding to each brightness class;
firstly detecting the brightness class of the frame of the image and then adjusting chromaticity values of the pixel points of the frame of the image using a corresponding saturation coefficient when the saturation of the frame of the image is enhanced.

7. The method of claim 1 or 6, wherein the brightness class of the frame of the image is determined by:

storing configuration information of the brightness classes of the frame of the image, including the brightness classes and a brightness value interval corresponding to each class; and
detecting the frame of the image to obtain a brightness value of the frame of the image, the brightness class corresponding to the interval to which the brightness value belongs being the brightness class of the frame of the image Img*Class.*

8. The method of claim 7, wherein the configuration information of the brightness classes of the frame of the image is determined by:
dividing the brightness of the frame of the image into *M* classes, dividing the entire range of brightness values into *M* intervals corresponding one by one to the *M* classes, a brightness class corresponding to an interval with the lowest brightness value being 0, a brightness class corresponding to an interval with the second lowest brightness value being 1, and an interval with an higher brightness value corresponding to an higher brightness class, and putting all brightness values which are equal to or greater than a set normal brightness threshold into one interval, which corresponds to a brightness class of *M*-1*.*

9. The method of claim 8, wherein when the frame of the image is in a YUV format, the enhancing the saturation of the frame of the image is performed according to the following equations:

$$Uout(x, y) = Su[m] \times (Uin(x, y) - \frac{L}{2}) + \frac{L}{2}$$

$$Vout(x, y) = Su[m] \times (Vin(x, y) - \frac{L}{2}) + \frac{L}{2}$$

where *Uin(x,y)* and *Vin(x,y)* are values of U components and V components of the pixel points before the saturation enhancement, *Uout(x,y)* and *Vout(x,y)* are values of the U components and V components of the pixel points after the saturation enhancement, *Su[m]* is a saturation coefficient in an array Su corresponding to each brightness class, which is recorded in the array Su, *m*=0,1,...M-1, and 0,1,...M-1 are the set brightness classes of the image, the saturation coefficient is 1 when the brightness class is M-1, where L is the number of the divided intervals of the whole histogram.

10. The method of claim 9, wherein the number L of the divided intervals of the whole histogram is 256.

11. A brightness enhancing module comprising a non-linear tensile curve table storing unit, a histogram equalization mapping table calculating unit, a brightness mapping table calculating unit and an image brightness enhancement mapping unit, wherein:

the non-linear tensile curve table storing unit is configured to store a non-linear tensile curve mapping table to be used;
the histogram equalization mapping table calculating unit is configured to, for each frame of an image to be processed, calculate a corresponding histogram equalization mapping table based on brightness data thereof;
the brightness mapping table calculating unit is configured to calculate a weighted average of mapping values in the non-linear tensile curve mapping table and the histogram equalization mapping table corresponding to each brightness value in a set of brightness values of pixel points of the frame of the image, and record a corresponding relation between each brightness value and the weighted average of the mapping values into a brightness mapping table; and
the image brightness enhancement mapping unit is configured to update the brightness value of the pixel points of the frame of the image to the weighted average of the mapping values according to the brightness mapping table to complete brightness enhancement; **characterized in that**: the brightness mapping table calculating unit is configured to calculate the weighted average of the mapping values in the non-linear tensile curve mapping table and the histogram equalization mapping table corresponding to each brightness value in the set of brightness values of the pixel points of the frame of the image according to the following equation:

$$MapTablAvg[k] = (\text{Im} gClass \times MapTabEq[k] + (M - \text{Im} gClass) \times MapTabGm[k]) / M$$

where $k$ is a brightness value in the set of brightness values of the pixel points of the frame of the image; M is the number of set brightness classes of the image;

*MapTablAvg[k]* is a mapping value corresponding to the brightness value k in the brightness mapping table, and *MapTablAvg[k]* calculated by the above equation constitutes the brightness mapping table;

Im *gClass* is a brightness class of the frame of the image obtained by detecting the brightness of the frame of the image;

*MapTabEq[k]* is a mapping value corresponding to the brightness value $k$ in the histogram equalization mapping table; and

*MapTabGm[k]* is a mapping value corresponding to the brightness value $k$ in the non-linear tensile curve mapping table.

12. The brightness enhancing module of claim 11, wherein the histogram equalization mapping table calculating unit comprises a brightness histogram calculating unit, an intermediate point calculating unit, a dynamic breakpoint calculating unit, a control unit and a mapping table generating unit, wherein:

the brightness histogram calculating unit is configured to calculate a brightness histogram of a frame of the image to be processed to obtain a histogram value of each brightness value $k$, i.e., the number of pixel points having the brightness value, and to output to the intermediate point calculating unit, $k=0,1,2,...L-1$, where L is the number of the divided intervals of the whole histogram;

the intermediate point calculating unit is configured to calculate an intermediate point $\beta_n$ in each divided interval of the histogram based on the histogram value of each brightness value $k$, to output to the dynamic breakpoint calculating unit;

the dynamic breakpoint calculating unit is configured to calculate a dynamic breakpoint $c_n$ between the intervals of the histogram according to the following equation:

$$c_n = \left\lfloor \frac{a_n + b_n}{2} + \alpha \times \left( \beta_n - \frac{a_n + b_n}{2} \right) \right\rfloor \; ; \text{or} \quad c_n = \left\lceil \frac{a_n + b_n}{2} + \alpha \times \left( \beta_n - \frac{a_n + b_n}{2} \right) \right\rceil$$

where $a_n$, $b_n$ are a head point and end point of an interval of the histogram, respectively; $\alpha$ is a preset control parameter of histogram equalization degree, $0 \leq \alpha \leq 1$; and $\lfloor * \rfloor$ represents rounding down to the nearest integer and $\lceil * \rceil$ represents rounding up to the nearest integer, $0 < C_n < (L-1)$;

the control unit is configured to control the intermediate point unit and dynamic breakpoint calculating unit to perform operations, divide the whole histogram into L intervals through n-times iteratively calling, and output the L divided intervals and brightness values contained therein to the mapping table generating unit; and

the mapping table generating unit is configured to number all intervals from 0 to L-1 in turn in an order, from big to small, of the first brightness value contained in each interval, then correlate each brightness value contained in each interval with a mapping value which equals to the interval number, and replace each brightness value in the interval [0,L-1] with the corresponding mapping value to obtain the histogram equalization mapping table, where $2^n = L$.

13. The brightness enhancing module of claim 12, wherein the control unit is configured to divide the histogram into 256 intervals, the number of the iterations being 8.

14. A video enhancing device comprising the brightness enhancing module of any one of claim 11-13.

15. The video enhancing device of claim 14, wherein the video enhancing device further comprises an image brightness detecting module, and wherein:

the image brightness detecting module comprises a configuration information storing unit and a brightness class calculating unit; wherein

the configuration information storing unit is configured to store configuration information of the brightness classes of the frame of the image, including the brightness classes and a brightness value interval corresponding to each class; and

the brightness class calculating unit is configured to calculate, based on brightness data of a frame of the received image to be processed, a brightness value of the frame of the image, determine the brightness class corresponding to the interval to which the brightness value belongs according to the configuration information, output the brightness class as the brightness class of the frame of the image to the brightness mapping table calculating unit in the brightness enhancing module.

16. The video enhancing device of claim 15, wherein there are *M* brightness classes, the entire range of brightness values is divided into *M* intervals corresponding one by one to the *M* classes, a brightness class corresponding to an interval with the lowest brightness value is 0, a brightness class corresponding to an interval with the second lowest brightness value is 1, an interval with an higher brightness value corresponds to an higher brightness class, and all brightness values which are equal to or greater than a set normal brightness threshold are put into one interval, which corresponds to a brightness class of *M*-1.

17. The video enhancing device of any one of claim 15-16, wherein the video enhancing device further comprises a saturation enhancing module comprising a configuration information storing unit and a saturation enhancement calculating unit, and wherein:

the brightness class calculating unit in the image brightness detecting module is further configured to output the brightness class of the frame of the image to be processed to the saturation enhancement calculating unit in the saturation enhancing module;
the configuration information storing unit is configured to store the set brightness classes of the image and a set saturation coefficient corresponding to each brightness class; and
the saturation enhancement calculating unit is configured to adjust chromaticity values of the pixel points of the frame of the image using a corresponding saturation coefficient according to brightness class of the frame of the received image when the saturation of the frame of the image to be processed is enhanced.

**Patentansprüche**

1. Video-Verstärkungs-Verfahren, welches umfasst:

Einstellen einer nicht-linearen Spannungs-Dehnungs-Kurven-Abbildungstabelle;
für jeden zu verarbeitenden Bildrahmen, Berechnen einer Histogramm-Angleichungs-Abbildungstabelle des Bildrahmens basierend auf Helligkeitsdaten davon, dann Berechnen eines gewichteten Durchschnitts von Zuordnungswerten in der nicht-linearen Spannungs-Dehnungs-Kurven-Abbildungstabelle und der Histogramm-Angleichungs-Abbildungstabelle entsprechend eines jeden Helligkeitswerts in einem Satz von Helligkeitswerten von Pixelpunkten des Bildrahmens, und Aufzeichnen eines entsprechenden Verhältnisses zwischen jedem Helligkeitswert und dem gewichteten Durchschnitt der Zuordnungswerte in einer Helligkeits-Abbildungstabelle; und dann Aktualisieren des Helligkeitswerts der Pixelpunkte des Bildrahmens auf den gewichteten Durchschnitt der Zuordnungswerte gemäß der Helligkeits-Abbildungstabelle, um die Helligkeits-Verstärkung zu vollenden; **dadurch gekennzeichnet, dass**:
das Berechnen des gewichteten Durchschnitts der Zuordnungswerte in der nicht-linearen Spannungs-Dehnungs-Kurven-Abbildungstabelle und der Histogramm-Angleichungs-Abbildungstabelle entsprechend jedem Helligkeitswert in dem Satz der Helligkeitswerte der Pixelpunkte des Bildrahmens umfasst, Berechnen des gewichteten Durchschnitts der Zuordnungswerte unter Verwendung der folgenden Gleichung:

$$MapTablAvg[k] = (Im\,gClass \times MapTabEq[k] + (M - Im\,gClass) \times MapTabGm[k]) / M$$

worin k ein Helligkeitswert in dem Satz der Helligkeitswerte der Pixelpunkte des Bildrahmens ist; *M* die Zahl des Satzes an Helligkeits-Klassen des Bilds ist;
*MapTablAvg[k]* ein Zuordnungswert entsprechend dem Helligkeitswert k in der Helligkeits-Abbildungstabelle ist, und *MapTablAvg[k],* berechnet anhand der vorstehenden Gleichung, die Helligkeits-Abbildungstabelle darstellt;
*Im gClass* eine Helligkeits-Klasse des Bildrahmens ist, die durch Erfassen der Helligkeit des Bildrahmens erhalten wurde;
*MapTabEq[k]* ein Zuordnungswert entsprechend dem Helligkeitswert *k* in der Histogramm-Angleichungs-Abbildungstabelle ist; und
*MapTabGm[k]* ein Zuordnungswert entsprechend dem Helligkeitswert k in der nicht-linearen Spannungs-Dehnungs-Kurven-Abbildungstabelle ist.

**2.** Verfahren nach Anspruch 1, worin das Berechnen der Histogramm-Angleichungs-Abbildungstabelle des Bildrahmens basierend auf Helligkeitsdaten davon umfasst:

Schritt 1, für einen zu verarbeitenden Bildrahmen, zuerst Berechnen eines Helligkeits-Histogramms des Bildrahmens, um einen Histogramm-Wert eines jeden Helligkeitswerts k zu erhalten, d.h. die Zahl an Pixelpunkten mit dem Helligkeitswert, $k = 0,1,2, ...$ L-1, worin L die Zahl der geteilten Intervalle des gesamten Histogramms ist; Schritt 2, Berechnen eines Zwischenpunkts $\beta_n$ in jedem geteilten Intervall des Histogramms, und dann Berechnen eines dynamischen Breakpoints $c_n$ zwischen den Intervallen des Histogramms gemäß der folgenden Gleichung:

$$c_n = \left\lfloor \frac{a_n + b_n}{2} + \alpha \times \left( \beta_n - \frac{a_n + b_n}{2} \right) \right\rfloor \; ; \text{or} \quad c_n = \left\lceil \frac{a_n + b_n}{2} + \alpha \times \left( \beta_n - \frac{a_n + b_n}{2} \right) \right\rceil$$

worin $a_n$, $b_n$ Kopfpunkt bzw. Endpunkt eines Intervalls des Histogramms sind; $\alpha$ ein voreingestellter Kontrollparameter des Histogramm-Angleichungs-Grads ist, $0 \le \alpha \le 1$; und $\lfloor * \rfloor$ Abrunden auf die nächste ganze Zahl darstellt und $\lceil * \rceil$ Aufrunden auf die nächste ganze Zahl darstellt, $0 < C_n < (L\ 1)$; Schritt 3, Wiederholen von Schritt 2, Teilen des gesamten Histogramms in L Intervalle durch n-maliges wiederholtes Rufen, und Zählen aller Intervalle, der Reihe nach von 0 bis L-1 in einer Ordnung von Groß zu Klein, des ersten in jedem Intervall enthaltenen Helligkeitswerts, dann Korrelieren eines jeden in jedem Intervall enthaltenen Helligkeitswerts mit einem Zuordnungswert, der gleich der Intervallzahl ist, und Ersetzen eines jeden Helligkeitswerts in dem Intervall [0, L-l] mit dem entsprechend Zuordnungswert, um die Histogramm-Angleichungs-Abbildungstabelle zu erhalten, worin $2^n = L$.

**3.** Verfahren nach Anspruch 2, worin die Zahl L der geteilten Intervalle des Histogramms 256 ist, und die Zahl der Wiederholungen 8 ist.

**4.** Verfahren nach Anspruch 3, worin der Wertebereich der Kontrollparameter $\alpha$ des Histogramm-Angleichungs-Grads $0,4 \sim 0,6$ ist.

**5.** Verfahren nach Anspruch 2, worin wenn bei den geteilten Intervallen gleiche Intervalle vorhanden sind, jedes Intervall bei den gleichen Intervallen separat und nacheinander gezählt werden; worin ein Helligkeitswert in dem gleichen Intervall mehreren Zahlen entspricht, und worin der Helligkeitswert einer der Zahlen durch Konvention zugeordnet wird.

**6.** Verfahren nach Anspruch 1, worin nachdem die Helligkeits-Verstärkung vervollständigt ist, das Verfahren weiter umfasst, Verstärken der Sättigung des Bildrahmens durch:
Einstellen von Helligkeits-Klassen des Bilds und Einstellen eines Sättigungs-Koeffizienten entsprechend einer jeden Helligkeits-Klasse; zuerst Erfassen der Helligkeits-Klasse des Bildrahmens und dann Einstellen chromatischer Werte der Pixelpunkte des Bildrahmens unter Verwendung eines entsprechenden Sättigungswertes, wenn die Sättigung des Bildrahmens verstärkt ist.

**7.** Verfahren nach Anspruch 1 oder 6, worin die Helligkeits-Klasse des Bildrahmens bestimmt wird durch:

Speichern von Konfigurationsinformation der Helligkeits-Klassen des Bildrahmens, einschließlich der Helligkeits-Klassen und eines Helligkeitswert-Intervalls entsprechend einer jeden Klasse; und
Erfassen des Bildrahmens, um einen Helligkeitswert des Bildrahmens zu erhalten, worin Helligkeits-Klasse, die dem Intervall, zu dem der Helligkeitswert gehört, entspricht die Helligkeits-Klasse des Bildrahmens *ImgClass* ist.

**8.** Verfahren nach Anspruch 7, worin die Konfigurationsinformation der Helligkeits-Klassen des Bildrahmens bestimmt wird durch:
Teilen der Helligkeit des Bildrahmens in *M* Klassen, Teilen des gesamten Bereichs an Helligkeitswerten in *M* Intervalle, die einer nach dem anderen den *M* Klassen entsprechen, worin eine Helligkeits-Klasse entsprechend einem Intervall mit dem geringsten Helligkeitswert 0 ist, worin eine Helligkeits-Klasse entsprechend einem Intervall mit dem zweit geringsten Helligkeitswert 1 ist, und worin ein Intervall mit einem höheren Helligkeitswert einer höheren Helligkeits-Klasse entspricht, und Einstellen aller Helligkeitswerte, die gleich oder größer als ein Satz normaler Helligkeit Grenzwerte ist, in ein Intervall, das einer Helligkeits-Klasse *M*-1 entspricht.

9. Verfahren nach Anspruch 8, worin wenn der Bildrahmen in einem YUV Format ist, die Verstärkung der Sättigung des Bildrahmens gemäß den folgenden Gleichungen durchgeführt wird:

$$Uout(x,y) = Su[m] \times (Uin(x,y) - \frac{L}{2}) + \frac{L}{2}$$

$$Vout(x,y) = Su[m] \times (Vin(x,y) - \frac{L}{2}) + \frac{L}{2}$$

worin *Uin*(x,y) und *Vin*(x,y) Werte von U-Komponenten und V-Komponenten der Pixelpunkte vor der Sättigungs-Verstärkung sind, *Uout*(x,y) und *Vout(x,y)* Werte der U-Komponenten und V-Komponenten der Pixelpunkte nach der Sättigungs-Verstärkung sind, *Su[m]* ein Sättigungskoeffizient in einem Array ist, *Su* jeder Helligkeits-Klasse entspricht, die in dem Array *Su* aufgezeichnet ist, *m*=0,1, ... M-1, und 0,1, ... M-1 der Satz Helligkeits-Klassen des Bilds ist, worin der Sättigung-Koeffizient 1 ist, wenn die Helligkeits-Klasse M-1 ist, worin L die Zahl der geteilten Intervalle des gesamten Histogramms ist.

10. Verfahren nach Anspruch 9, worin die Zahl L der geteilten Intervalle des gesamten Histogramms 256 ist.

11. Helligkeits-Verstärkungsmodul, welche eine nicht-lineare Spannungs-Dehnungs-Kurven-Tabelle-Speichereinheit umfasst, eine Histogramm-Angleichungs-AbbildungsTabellen-Berechnungseinheit, eine Helligkeits-Abbildungstabelle-Berechnungseinheit und eine Bild-Helligkeits-Verstärkungs-Zuordnungseinheit, worin:

die nicht-lineare Spannungs-Dehnungs-Kurven-Tabellen-Speichereinheit ausgestaltet ist, eine zu verwendende nicht-lineare Spannungs-Dehnungs-Kurven-Abbildungstabelle zu speichern;
die Histogramm-Angleichungs-Abbildungstabellen-Berechnungseinheit ausgestaltet ist, für jeden zu verarbeitenden Bildrahmen, eine entsprechende Histogramm-Angleichungs-Abbildungstabelle basierend auf Helligkeitsdaten davon zu berechnen;
die Helligkeits-Abbildungstabellen-Berechnungseinheit ausgestaltet ist, einen gewichteten Durchschnitt von Zuordnungswerten in der nicht-linearen Spannungs-Dehnungs-Kurven-Abbildungstabelle und der Histogramm-Angleichungs-Abbildungstabelle entsprechend eines jeden Helligkeitswerts in einen Satz an Helligkeitswerten von Pixelpunkten des Bildrahmens zu berechnen, und ein entsprechendes Verhältnis zwischen jedem Helligkeitswert und dem gewichteten Durchschnitt an Zuordnungswerten in eine Helligkeits-Abbildungstabelle zu speichern; und
die Bild-Helligkeits-Verstärkungs-Zuordnungseinheit ausgestaltet ist, den Helligkeitswert der Pixelpunkte des Bildrahmens auf den gewichteten Durchschnitt der Zuordnungswerte gemäß der Helligkeits-Abbildungstabelle zu aktualisieren, um die Helligkeits-Verstärkung zu vervollständigen;
**dadurch gekennzeichnet, dass**:
die Helligkeits-Abbildungstabellen-Berechnungseinheit ausgestaltet ist, den gewichteten Durchschnitt der Zuordnungswerte in der nicht-linearen Spannungs-Dehnungs-Kurven-Tabelle und der Histogramm-Angleichungs-Abbildungstabelle entsprechend eines jeden Helligkeitswerts in dem Satz an Helligkeitswerten der Pixelpunkte des Bildrahmens gemäß der folgenden Gleichung zu berechnen:

$$MapTablAvg[k] = \{Im\,gClass\,xMapTabEq[k] + (M - ImgClass)\,x\,MapTabGm[k])/\,M$$

worin k ein Helligkeitswert in dem Satz an Helligkeitswerten der Pixelpunkte des Bildrahmens ist;
*M* die Zahl des Satzes an Helligkeits-Klassen des Bilds ist;
*MapTablAvg[k]* ein Zuordnungswert entsprechend dem Helligkeitswert k in der Helligkeits-Abbildungstabelle ist, und das durch die vorstehende Gleichung berechnete *MapTablAvg[k]* die Helligkeits-Abbildungstabelle darstellt;
*Im gClass* eine Helligkeits-Klasse des Bildrahmens ist, die durch Erfassen der Helligkeit des Bildrahmens erhalten wurde;
*MapTabEq*[*k*] ein Zuordnungswert entsprechend dem Helligkeitswert *k* in der Histogramm-Angleichungs-Abbildungstabelle ist; und
*MapTabGm*[*k*] ein Zuordnungswert entsprechend dem Helligkeitswert *k* in der nicht-linearen Spannungs-Dehnungs-Kurven-Abbildungstabelle ist.

**12.** Helligkeits-Verstärkungsmodul nach Anspruch 11, worin die Histogramm-Angleichungs-Abbildungstabellen-Berechnungseinheit eine Helligkeits-Histogramm Berechnungseinheit umfasst, eine Zwischenpunkt-Berechnungseinheit, eine dynamischen Breakpoint-Berechnungseinheit, eine Steuereinheit und eine Abbildungstabellen-Erzeugungseinheit, worin:

die Helligkeits-Histogramm-Berechnungseinheit ausgestaltet ist, ein Helligkeits-Histogramm eines zu verarbeitenden Bildrahmen zu berechnen, um einen Histogramm-Wert eines jeden Helligkeitswert $k$ zu erhalten, d.h. die Zahl an Pixelpunkten mit dem Helligkeitswert, und an die Zwischenpunkts-Berechnungseinheit auszugeben, $k = 0,1,2, ... L$-1, worin $L$ die Zahl der geteilten Intervalle des gesamten Histogramms ist;
die Zwischenpunkts-Berechnungseinheit ausgestaltet ist, einen Zwischenpunkt $\beta_n$ in jeden geteilten Intervall des Histogramms basierend auf dem Histogramm-Wert eines jeden Helligkeitswerts $k$ zu berechnen, und an die dynamische Breakpoint-Berechnungseinheit auszugeben;
die dynamische Breakpoint-Berechnungseinheit ausgestaltet ist, einen dynamischen Breakpoint $c_n$ zwischen den Intervallen des Histogramms gemäß der folgenden Gleichung zu berechnen:

$$c_n = \left\lfloor \frac{a_n + b_n}{2} + \alpha \times \left( \beta_n - \frac{a_n + b_n}{2} \right) \right\rfloor \; ; \text{or} \quad c_n = \left\lceil \frac{a_n + b_n}{2} + \alpha \times \left( \beta_n - \frac{a_n + b_n}{2} \right) \right\rceil$$

worin $a_n$, $b_n$ ein Kopfpunkt bzw. ein Endpunkt eines Intervalls des Histogramms sind; $\alpha$ ein voreingestellter Kontrollparameter des Histogramm-Angleichungs-Grads ist, $0 \leq \alpha \leq 1$; und $\lfloor * \rfloor$ Abrunden auf die nächste ganze Zahl darstellt und $\lceil * \rceil$ Aufrunden auf die nächste ganze Zahl darstellt, $0 < C_n < (L-1)$;
die Steuereinheit ausgestaltet ist, die Zwischenpunkts-Einheit und die dynamische Breakpoint-Berechnungseinheit zur Durchführung eines Betriebs zu steuern, das gesamte Histogramm in L Intervalle durch n-maliges wiederholtes Rufen zu teilen, und die L geteilten Intervalle und darin enthaltenen Helligkeitswerts zu der Abbildungstabellen-Erzeugungseinheit auszugeben; und
die Abbildungstabellen-Erzeugungseinheit ausgestaltet ist, alle Intervalle von 0 bis L-1 der Reihe nach in einer Ordnung von Groß zu Klein, des ersten in jedem Intervall enthaltenen Helligkeitswerts zu zählen, dann jeden in jedem Intervall enthaltenen Helligkeitswerts mit einem Zuordnungswert, der gleich der Intervallzahl ist, zu korrelieren und eines jeden Helligkeitswert in dem Intervall [0, L-l] mit dem entsprechend Zuordnungswert zu ersetzen, um die Histogramm-Angleichungs-Abbildungstabelle zu erhalten, worin $2^n = L$.

**13.** Helligkeits-Verstärkungsmodul nach Anspruch 12, worin die Steuereinheit ausgestaltet ist, um das Histogramm in 256 Intervalle zu teilen, worin die Zahl an Wiederholungen 8 ist.

**14.** Videoverstärkungsgerät, welches das Helligkeits-Verstärkungsmodul nach einem der Ansprüche 11-13 enthält.

**15.** Videoverstärkungsgerät nach Anspruch 14, worin das Videoverstärkungsgerät weiter ein Bild-Helligkeits-Erfassungsmodul umfasst, und worin:

das Bild-Helligkeits-Erfassungsmodul eine Konfigurationsinformations-Speichereinheit und eine Helligkeits-Klasse Berechnungseinheit umfasst; worin
die Konfigurationsinformations-Speichereinheit ausgestaltet ist, die KonfigurationsInformation der Helligkeits-Klassen des Bildrahmens, einschließlich der Helligkeits-Klassen und ein Helligkeitswert-Intervall entsprechend einer jeden Klasse zu speichern; und
die Helligkeits-Klassen-Berechnungseinheit ausgestaltet ist, basierend auf Helligkeitsdaten eines Rahmens eines empfangenen, zu verarbeitenden Bilds, ein Helligkeitswert des Bildrahmens zu berechnen, die Helligkeits-Klasse entsprechend dem Intervall, zu dem der Helligkeitswert gehört, gemäß der Konfigurationsinformation zu bestimmen, die Helligkeits-Klasse als die Helligkeits-Klasse des Bildrahmens zu der Helligkeits-Abbildungstabellen-Berechnungseinheit in dem Helligkeits-Verstärkungsmodul auszugeben.

**16.** Videoverstärkungsgerät nach Anspruch 15, worin $M$ Helligkeits-Klassen vorhanden sind, worin der gesamte Bereich an Helligkeitswerten in M Intervalle entsprechend einer nach dem anderen zu den $M$ Klassen geteilt wird, worin eine Helligkeits-Klasse entsprechend einem Intervall mit dem geringsten Helligkeitswert 0 ist, eine Helligkeits-Klasse entsprechend einem Intervall mit dem zweit geringsten Helligkeitswert 1 ist, ein Intervall mit einem höheren Helligkeitswert einer höheren Helligkeits-Klasse entspricht, und alle Helligkeitswerts, die gleich oder größer als ein bestimmter normaler Helligkeitsgrenzwert sind, in ein Intervall gesetzt werden, das einer Helligkeits-Klasse *M*-1 entspricht.

17. Videoverstärkungsgerät nach einem der Ansprüche 15-16, worin das Videoverstärkungsgerät weiter ein Sättigungsverstärkungmodul enthält, das eine Konfigurationsinformation-Speichereinheit und eine Sättigungs-Verstärkungs-Berechnungseinheit aufweist, und worin:

die Helligkeits-Klassen-Berechnungseinheit in dem Bild-Helligkeitserfassungs-Modul weiter ausgestaltet ist, die Helligkeits-Klasse des zu verarbeitenden Bildrahmen an die Sättigungs-Verstärkung Berechnungseinheit in dem Sättigungs-Verstärkungsmodul auszugeben;
die Konfigurationsinformations-Speichereinheit ausgestaltet ist, die eingestellten Helligkeits-Klassen des Bilds und ein eingestellter Sättigung-Koeffizient entsprechend jeder Helligkeits-Klasse zu speichern; und
die Sättigungs-Verstärkungs-Berechnungseinheit ausgestaltet ist, Farbwerte der Pixelpunkte des Bildrahmens unter Verwendung eines entsprechenden Sättigung-Koeffizienten gemäß der Helligkeits-Klasse des Rahmens des empfangenen Bilds einzustellen, wenn die Sättigung des zu verarbeitenden Bildrahmen verstärkt ist.

**Revendications**

1. Procédé d'amélioration de vidéo comprenant les étapes ci-dessous consistant à :

définir une table de mise en correspondance de courbe de traction non linéaire ;
pour chaque trame d'une image à traiter, calculer une table de mise en correspondance d'égalisation d'histogramme de la trame de l'image sur la base de données de luminosité connexes, et calculer ensuite une moyenne pondérée de valeurs de mise en correspondance dans la table de mise en correspondance de courbe de traction non linéaire et la table de mise en correspondance d'égalisation d'histogramme correspondant à chaque valeur de luminosité dans un ensemble de valeurs de luminosité de points de pixels de la trame de l'image, et enregistrer une relation correspondante entre chaque valeur de luminosité et la moyenne pondérée des valeurs de mise en correspondance dans une table de mise en correspondance de luminosité ; et mettre ensuite à jour la valeur de luminosité des points de pixels de la trame de l'image sur la moyenne pondérée des valeurs de mise en correspondance selon la table de mise en correspondance de luminosité pour achever l'amélioration de luminosité ;
**caractérisé en ce que** :
l'étape de calcul de la moyenne pondérée de valeurs de mise en correspondance dans la table de mise en correspondance de courbe de traction non linéaire et la table de mise en correspondance d'égalisation d'histogramme correspondant à chaque valeur de luminosité dans l'ensemble des valeurs de luminosité des points de pixels de la trame de l'image consiste à calculer la moyenne pondérée des valeurs de mise en correspondance en utilisant l'équation ci-dessous :

$$MapTablAvg[k] = (\text{Im } gClass \text{ x } MapTabEq[k]) + (M - \text{Im } gClass) \text{ x } MapTabGm[k]) / M$$

où « *k* » est une valeur de luminosité dans l'ensemble des valeurs de luminosité des points de pixels de la trame de l'image ; « *M* » est le nombre de classes de luminosité de l'image ;
« *MapTablAvg[k]* » est une valeur de mise en correspondance correspondant à la valeur de luminosité « *k* » dans la table de mise en correspondance de luminosité, et MapTablAvg[*k*] calculée par l'équation ci-dessus constitue la table de mise en correspondance de luminosité ;
« Im *gClass* » est une classe de luminosité de la trame de l'image obtenue en détectant la luminosité de la trame de l'image ;
« *MapTabEq[k]* » est une valeur de mise en correspondance correspondant à la valeur de luminosité « *k* » dans la table de mise en correspondance d'égalisation d'histogramme ; et
« *MapTabGm[k]* » est une valeur de mise en correspondance correspondant à la valeur de luminosité « k » dans la table de mise en correspondance de courbe de traction non linéaire.

2. Procédé selon la revendication 1, dans lequel l'étape de calcul de la table de mise en correspondance d'égalisation d'histogramme de la trame de l'image sur la base de données de luminosité connexes comprend les étapes ci-dessous consistant à :

étape 1, pour une trame de l'image à traiter, calculer tout d'abord un histogramme de luminosité de la trame de l'image en vue d'obtenir une valeur d'histogramme de chaque valeur de luminosité «$k$», c'est-à-dire, le nombre de points de pixels présentant la valeur de luminosité, $k = 0, 1, 2, ..., L-1$, où « L » est le nombre d'intervalles divisés de l'histogramme entier ;

étape 2, calculer un point intermédiaire «$\beta_n$» dans chaque intervalle divisé de l'histogramme, et calculer ensuite un point de rupture dynamique «$c_n$» entre les intervalles de l'histogramme selon l'équation suivante :

$$c_n = \left\lfloor \frac{a_n + b_n}{2} + \alpha \times \left( \beta_n - \frac{a_n + b_n}{2} \right) \right\rfloor \; ; \; ou \quad c_n = \left\lceil \frac{a_n + b_n}{2} + \alpha \times \left( \beta_n - \frac{a_n + b_n}{2} \right) \right\rceil$$

où «$a_n$, $b_n$» correspondent à un point de tête et à un point de fin d'un intervalle de l'histogramme, respectivement ; «$\alpha$» est un paramètre de commande prédéfini de degré d'égalisation d'histogramme, $0 \leq \alpha \leq 1$ ; et $\lfloor * \rfloor$ représente un arrondi au nombre entier inférieur le plus proche et $\lceil * \rceil$ représente un arrondi au nombre entier supérieur le plus proche, $0 < C_n < (L-1)$;

étape 3, répéter l'étape 2, diviser l'histogramme entier en « L » intervalles à travers « n » appels itératifs, et numéroter tous les intervalles de « 0 » à « L-1 » à tour de rôle, selon un ordre allant de grand à petit, de la première valeur de luminosité contenue dans chaque intervalle, et corréler ensuite chaque valeur de luminosité contenue dans chaque intervalle avec une valeur de mise en correspondance qui est égale au nombre d'intervalles, et remplacer chaque valeur de luminosité dans l'intervalle [0, L-1] par la valeur de mise en correspondance correspondante, en vue d'obtenir la table de mise en correspondance d'égalisation d'histogramme, où $2^n = L$.

3. Procédé selon la revendication 2, dans lequel le nombre « L » des intervalles divisés de l'histogramme est égal à 256, et le nombre des itérations est égal à 8.

4. Procédé selon la revendication 3, dans lequel la plage de valeurs du paramètre de commande « $\alpha$ » du degré d'égalisation d'histogramme est 0,4-0,6.

5. Procédé selon la revendication 2, dans lequel, lorsqu'il existe les mêmes intervalles parmi les intervalles divisés, chaque intervalle parmi les mêmes intervalles est numéroté séparément et successivement ; une valeur de luminosité dans les mêmes intervalles correspond à plusieurs nombres, et la valeur de luminosité est mise en correspondance avec l'un des nombres par convention.

6. Procédé selon la revendication 1, dans lequel, dès lors que l'amélioration de luminosité est achevée, le procédé comprend en outre l'étape consistant à améliorer la saturation de la trame de l'image en mettant en oeuvre les étapes ci-dessous consistant à :
définir des classes de luminosité de l'image et définir un coefficient de saturation correspondant à chaque classe de luminosité ; tout d'abord, détecter la classe de luminosité de la trame de l'image et ensuite ajuster des valeurs de chromaticité des points de pixels de la trame de l'image en utilisant un coefficient de saturation correspondant lorsque la saturation de la trame de l'image est améliorée.

7. Procédé selon la revendication 1 ou 6, dans lequel la classe de luminosité de la trame de l'image est déterminée en mettant en oeuvre les étapes ci-dessous consistant à :

stocker des informations de configuration des classes de luminosité de la trame de l'image, y compris les classes de luminosité et un intervalle de valeurs de luminosité correspondant à chaque classe ; et
détecter la trame de l'image en vue d'obtenir une valeur de luminosité de la trame de l'image, la classe de luminosité correspondant à l'intervalle auquel appartient la valeur de luminosité correspondant à la classe de luminosité de la trame de l'image « Img*Class* ».

8. Procédé selon la revendication 7, dans lequel les informations de configuration des classes de luminosité de la trame de l'image sont déterminées en mettant en oeuvre les étapes ci-dessous consistant à :
diviser la luminosité de la trame de l'image en « *M* » classes, diviser la plage entière de valeurs de luminosité en « *M* » intervalles correspondant un par un aux « *M* » classes, une classe de luminosité correspondant à un intervalle présentant la valeur de luminosité la plus basse étant « 0 », une classe de luminosité correspondant à un intervalle présentant la deuxième valeur de luminosité la plus basse étant « 1 », et un intervalle présentant une valeur de luminosité plus élevée correspondant à une classe de luminosité plus élevée, et placer toutes les valeurs de luminosité qui sont égales ou supérieures à un seuil de luminosité normale défini dans un intervalle, ce qui correspond à une classe de luminosité de « M-1 ».

9. Procédé selon la revendication 8, dans lequel, lorsque la trame de l'image est dans un format « YUV », et l'étape d'amélioration de la saturation de la trame de l'image est mise en oeuvre selon les équations suivantes :

$$Uout(x, y) = Su[m] \times (Uin(x, y) - \frac{L}{2}) + \frac{L}{2}$$

$$Vout(x, y) = Su[m] \times (Vin(x, y) - \frac{L}{2}) + \frac{L}{2}$$

où « *Uin(x, y)* » et « *Vin(x, y)* » sont des valeurs de composantes « U » et de composantes « V » des points de pixels avant l'amélioration de saturation, « *Uout(x, y)* » et « *Vout(x, y)* » sont des valeurs de composantes « U » et de composantes « V » des points de pixels après l'amélioration de saturation, « *Su[m]* » est un coefficient de saturation dans un tableau « Su » correspondant à chaque classe de luminosité, lequel est enregistré dans le tableau « Su », *m* = 0, 1, ..., M-1, et 0, 1, ..., M-1 sont les classes de luminosité définies de l'image, le coefficient de saturation est de « 1 » lorsque la classe de luminosité est « M-1 », où « L » est le nombre d'intervalles divisés de l'histogramme entier.

10. Procédé selon la revendication 9, dans lequel le nombre « L » des intervalles divisés de l'histogramme entier est égal à 256.

11. Module d'amélioration de luminosité comprenant une unité de stockage de table de courbe de traction non linéaire, une unité de calcul de table de mise en correspondance d'égalisation d'histogramme, une unité de calcul de table de mise en correspondance de luminosité et une unité de mise en correspondance d'amélioration de luminosité d'image, dans lequel :

l'unité de stockage de table de courbe de traction non linéaire est configurée de manière à stocker une table de mise en correspondance de courbe de traction non linéaire à utiliser ;
l'unité de calcul de table de mise en correspondance d'égalisation d'histogramme est configurée de manière à, pour chaque trame d'une image à traiter, calculer une table de mise en correspondance d'égalisation d'histogramme correspondante sur la base des données de luminosité connexes ;
l'unité de calcul de table de mise en correspondance de luminosité est configurée de manière à calculer une moyenne pondérée de valeurs de mise en correspondance dans la table de mise en correspondance de courbe de traction non linéaire et la table de mise en correspondance d'égalisation d'histogramme correspondant à chaque valeur de luminosité dans un ensemble de valeurs de luminosité de points de pixels de la trame de l'image, et à enregistrer une relation correspondante entre chaque valeur de luminosité et la moyenne pondérée des valeurs de mise en correspondance dans une table de mise en correspondance de luminosité ; et
l'unité de mise en correspondance d'amélioration de luminosité d'image est configurée de manière à mettre à jour la valeur de luminosité des points de pixels de la trame de l'image sur la moyenne pondérée des valeurs de mise en correspondance selon la table de mise en correspondance de luminosité pour achever l'amélioration de luminosité ;
**caractérisé en ce que** :
l'unité de calcul de table de mise en correspondance de luminosité est configurée de manière à calculer la moyenne pondérée de valeurs de mise en correspondance dans la table de mise en correspondance de courbe de traction non linéaire et la table de mise en correspondance d'égalisation d'histogramme correspondant à chaque valeur de luminosité dans l'ensemble des valeurs de luminosité des points de pixels de la trame de l'image selon l'équation ci-dessous :

$$MapTablAvg[k] = (Im\,gClass \times MapTabEq[k]) + (M - Im\,gClass) \times MapTabGm[k]) / M$$

où « *k* » est une valeur de luminosité dans l'ensemble des valeurs de luminosité des points de pixels de la trame de l'image ;

« *M* » est le nombre de classes de luminosité de l'image ;

« *MapTablAvg*[*k*] » est une valeur de mise en correspondance correspondant à la valeur de luminosité « *k* » dans la table de mise en correspondance de luminosité, et *MapTablAvg*[*k*] calculée par l'équation ci-dessus constitue la table de mise en correspondance de luminosité ;

« Im *gClass* » est une classe de luminosité de la trame de l'image obtenue en détectant la luminosité de la trame de l'image ;

« *MapTabEq*[*k*] » est une valeur de mise en correspondance correspondant à la valeur de luminosité « *k* » dans la table de mise en correspondance d'égalisation d'histogramme ; et

« *MapTabGm*[*k*] » est une valeur de mise en correspondance correspondant à la valeur de luminosité « *k* » dans la table de mise en correspondance de courbe de traction non linéaire.

12. Module d'amélioration de luminosité selon la revendication 11, dans lequel l'unité de calcul de table de mise en correspondance d'égalisation d'histogramme comprend une unité de calcul d'histogramme de luminosité, une unité de calcul de point intermédiaire, une unité de calcul de point de rupture dynamique, une unité de commande et une unité de génération de table de mise en correspondance, dans lequel :

l'unité de calcul d'histogramme de luminosité est configurée de manière à calculer un histogramme de luminosité de la trame de l'image à traiter, en vue d'obtenir une valeur d'histogramme de chaque valeur de luminosité « *k* », c'est-à-dire, le nombre de points de pixels présentant la valeur de luminosité, et à fournir en sortie à l'unité de calcul de point intermédiaire, $k = 0, 1, 2, ..., L-1$, où « L » est le nombre d'intervalles divisés de l'histogramme entier ;

l'unité de calcul de point intermédiaire est configurée de manière à calculer un point intermédiaire « $\beta_n$ » dans chaque intervalle divisé de l'histogramme, sur la base de la valeur d'histogramme de chaque valeur de luminosité « *k* », à fournir en sortie à l'unité de calcul de point de rupture dynamique ;

l'unité de calcul de point de rupture dynamique est configurée de manière à calculer un point de rupture dynamique « $c_n$ » entre les intervalles de l'histogramme selon l'équation suivante :

$$c_n = \left\lfloor \frac{a_n + b_n}{2} + \alpha \times \left( \beta_n - \frac{a_n + b_n}{2} \right) \right\rfloor \; ; \text{ ou } \quad c_n = \left\lceil \frac{a_n + b_n}{2} + \alpha \times \left( \beta_n - \frac{a_n + b_n}{2} \right) \right\rceil$$

où « $a_n$, $b_n$ » correspondent à un point de tête et à un point de fin d'un intervalle de l'histogramme, respectivement ; « $\alpha$ » est un paramètre de commande prédéfini de degré d'égalisation d'histogramme, $0 \le \alpha \le 1$ ; et $\lfloor * \rfloor$ représente un arrondi au nombre entier inférieur le plus proche et $\lceil * \rceil$ représente un arrondi au nombre entier supérieur le plus proche, $0 < C_n < (L-1)$ ;

l'unité de commande est configurée de manière à commander à l'unité de calcul de point intermédiaire et à l'unité de calcul de point de rupture dynamique de mettre en oeuvre des opérations, de diviser l'histogramme entier en « L » intervalles à travers « n » appels itératifs, et de fournir en sortie les L intervalles divisés et des valeurs de luminosité contenues dans ceux-ci, à l'unité de génération de table de mise en correspondance ; et

l'unité de génération de table de mise en correspondance est configurée de manière à numéroter tous les intervalles de « 0 » à « L-1 » à tour de rôle, selon un ordre allant de grand à petit, de la première valeur de luminosité contenue dans chaque intervalle, et à corréler ensuite chaque valeur de luminosité contenue dans chaque intervalle avec une valeur de mise en correspondance qui est égale au nombre d'intervalles, et à remplacer chaque valeur de luminosité dans l'intervalle [0, L-1] par la valeur de mise en correspondance correspondante, en vue d'obtenir la table de mise en correspondance d'égalisation d'histogramme, où $2^n = L$.

13. Module d'amélioration de luminosité selon la revendication 12, dans lequel l'unité de commande est configurée de manière à diviser l'histogramme en 256 intervalles, le nombre d'itérations étant égal à 8.

14. Dispositif d'amélioration de vidéo comprenant le module d'amélioration de luminosité selon l'une quelconque des revendications 11 à 13.

15. Dispositif d'amélioration de vidéo selon la revendication 14, dans lequel le dispositif d'amélioration de vidéo comprend en outre un module de détection de luminosité d'image, et dans lequel :

le module de détection de luminosité d'image comprend une unité de stockage d'informations de configuration et une unité de calcul de classe de luminosité ; dans lequel

l'unité de stockage d'informations de configuration est configurée de manière à stocker des informations de configuration des classes de luminosité de la trame de l'image, y compris les classes de luminosité et un intervalle de valeurs de luminosité correspondant à chaque classe ; et

l'unité de calcul de classe de luminosité est configurée de manière à calculer, sur la base de données de luminosité d'une trame de l'image reçue à traiter, une valeur de luminosité de la trame de l'image, à déterminer la classe de luminosité correspondant à l'intervalle auquel la valeur de luminosité appartient selon les informations de configuration, à fournir en sortie la classe de luminosité, en tant que la classe de luminosité de la trame de l'image, à l'unité de calcul de table de mise en correspondance de luminosité dans le module d'amélioration de luminosité.

16. Dispositif d'amélioration de vidéo selon la revendication 15, dans lequel il existe « M » classes de luminosité, la plage entière de valeurs de luminosité est divisée en « M » intervalles correspondant un par un aux « M » classes, une classe de luminosité correspondant à un intervalle présentant la valeur de luminosité la plus basse étant « 0 », une classe de luminosité correspondant à un intervalle présentant la deuxième valeur de luminosité la plus basse étant « 1 », un intervalle présentant une valeur de luminosité plus élevée correspond à une classe de luminosité plus élevée, et toutes les valeurs de luminosité qui sont égales ou supérieures à un seuil de luminosité normale défini sont placées dans un intervalle, ce qui correspond à une classe de luminosité de « M-1 ».

17. Dispositif d'amélioration de vidéo selon l'une quelconque des revendications 15 à 16, dans lequel le dispositif d'amélioration de vidéo comprend en outre un module d'amélioration de saturation comprenant une unité de stockage d'informations de configuration et une unité de calcul d'amélioration de saturation, et dans lequel :

l'unité de calcul de classe de luminosité dans le module de détection de luminosité d'image est en outre configurée de manière à fournir en sortie la classe de luminosité de la trame de l'image à traiter à l'unité de calcul d'amélioration de saturation dans le module d'amélioration de saturation ;

l'unité de stockage d'informations de configuration est configurée de manière à stocker les classes de luminosité définies de l'image et un coefficient de saturation défini correspondant à chaque classe de luminosité ; et

l'unité de calcul d'amélioration de saturation est configurée de manière à ajuster des valeurs de chromaticité des points de pixels de la trame de l'image en utilisant un coefficient de saturation correspondant selon une classe de luminosité de la trame de l'image reçue lorsque la saturation de la trame de l'image à traiter est améliorée.

Input data buffer
(YUV image)
102

Video enhancing
device
104

Output data buffer
(YUV image)
106

## FIG. 1

Video enhancing device
104

Brightness data

Brightness enhancing
module
204

Enhanced
brightness
data

Brightness
data

Image brightness
detecting module
202

Data of
source
image

Output data

Saturation enhancing
module
206

Chromaticity data

Enhanced
chromaticity
data

## FIG. 2

Brightness data of
source image

Brightness class
of image

Non-linear curve
tensile storing unit
302

Histogram equalization
mapping table
calculating unit
304

Brightness mapping
table calculating unit
306

Brightness data of
source image

Image brightness
enhancement
mapping unit
308

Brightness data
of target image

## FIG. 3

Configuration
information
storing unit
402

Brightness class
of image

Chromaticity data of
source image

Saturation
enhancement
calculating unit
404

## FIG. 4

10 Calculating a brightness histogram of the image

20 Initializing

$$a_0 = 0, \; b_0 = 255$$

30 Calculating an intermediate point of the interval of the histogram

60 resetting the head point and end point of the divided interval

40 Calculating a dynamic breakpoint of the interval of the histogram

No

50
8 divisions are made?

Yes

70 setting a partial histogram equalization mapping table

FIG. 5

FIG. 6

**EP 2 323 373 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070092136 A